# EUROPÄISCHE PATENTSCHRIFT

(11) **EP 1 137 469 B1**
(45) Veröffentlichungstag und Bekanntmachung des Hinweises auf die Patenterteilung: **11.12.2002**
(21) Anmeldenummer: 99962144.4
(22) Anmeldetag: 11.11.1999
(51) Int. Cl.: B01D 29/11, B01D 33/11, B01D 33/46, B01D 29/64, B01D 21/26, B01D 21/24

(54) **VORRICHTUNG ZUM ABSCHEIDEN VON SCHMUTZWASSER**
DEVICE FOR SEPARATING WASTE WATER
DISPOSITIF DE SEPARATION D'EAU USEE

(30) Priorität: 12.11.1998 DE 19852119
(43) Veröffentlichungstag der Anmeldung: 04.10.2001
(73) Patentinhaber: Martin Systems AG, 96515 Sonneberg (DE)
(72) Erfinder: HARMS, Eberhard, D-96524 Mupperg (DE); GRIGO, Mark, D-96515 Sonneberg (DE); EHRSAM, Veikko, D-96515 Sonneberg (DE); KALIN, Eduard, D-96515 Sonneberg (DE)
(74) Vertreter: Luthardt, Günter, Dipl.-Ing.
(86) Internationale Anmeldenummer: EP9908693
(87) Internationale Veröffentlichungsnummer: WO00029090

(56) Entgegenhaltungen:
- EP-A- 0 137 510
- WO-A-83/02072
- BE-A- 677 944
- DE-B- 1 136 942
- DE-B- 1 167 795
- DE-C- 951 140
- FR-A- 2 351 687
- FR-A- 2 621 830
- US-A- 1 829 547
- US-A- 3 399 774
- US-A- 3 642 139

## Beschreibung

Die Erfindung betrifft eine Vorrichtung zum Abscheiden von Schmutzwasser aus mit Feststoffen beladenen Abwässern, insbesondere auf Schiffen.

Es ist bekannt, auf Schiffen das mit Feststoffen beladene Abwasser in hintereinander kaskadenförmig angeordnete Behälter einzuleiten, wobei sich die Feststoffe durch Sedimentation in den einzelnen Behältern auf den Böden der Behälter absetzen. Die Behälter sind durch Überlaufrohre miteinander verbunden, um einen Wasserausgleich herbeizuführen. Im unteren Bereich der Behälter sind Belüftungsdüsen angeordnet, um eine Wasserzirkulation zu bewirken und gleichzeitig die organischen Bestandteile aus den Feststoffen weitgehendst herauszulösen. Das Abwasser wird dabei gleichzeitig biologisch gereinigt. Nachdem eine gewisse Höhe des abgesetzten Bodenschlamms mit eingelagerten Feststoffen erreicht ist, oder auch in bestimmten Zeitabständen, wird dieser an bodenseitig der Behälter angeschlossenen Rohrleitungen über Steuerventile mittels Pumpen abgezogen und einer Entsorgung zugeführt. Die noch im Abwasser enthaltenen festen Schwimmstoffe wie zellulose Bestandteile, fasrige Stoffe usw. führen häufig zu Verstopfungen in den Überlaufrohren und verursachen den zeitweisen Ausfall derartiger Anlagen. Solche Betriebsstörungen auf Schiffen haben zur Folge, daß die sanitären Einrichtungen vorübergehend nicht benutzt werden können. Die Beseitigung der Störungen ist außerdem zeit- und aufwandintensiv und von üblen Gerüchen begleitet, die eine Belästigung der an Bord befindlichen Personen darstellen. Die Ausfällung der Feststoffe aus dem Abwasser durch Sedimentation im Rahmen der biologischen Reinigung hat außerdem den Nachteil, daß die den Feststoffen anhaftenden organischen Bestandteile nicht wirksam genug ausgeschwemmt werden.

Aus der WO 95/22391 ist eine Vorrichtung zur Abtrennung teilchenförmigen Materials von einer Trägerflüssigkeit bekannt, die einen Behälter aufeist, der durch eine Zwischenwand in eine obere Zone als oberer Sammelraum und eine untere Zone als unterer Sammelraum aufgeteilt ist. Die untere Zone dient der Einleitung des Abwassers und Ablagerung der Feststoffe, die obere Zone der Ableitung der geklärten Flüssigkeit. Die obere und untere Zone sind über eine vertikal angeordnete Kläreinrichtung verbunden. Die Kläreinrichtung ist mit einen oder mehreren zylindrischen Rohrkörpern ausgestattet, die eine Trennung der partikulären Substanzen von der Trägerflüssigkeit gegen die Strömungsrichtung bewirken. Geklärt werden Suspensionen bestehend aus Erde, Sand, Kiesteilchen und Wasser. Dabei weisen die abzuscheidenden partikulären Substanzen eine höhere Dichte als die zu klärende Flüssigkeit auf und lassen sich so infolge ihrer Schwerkraft ausfällen. Für Schweb- und Schwimmstoffe hingegen, wie sie in kommunalen Abwässern vorkommen die eine geringere Dichte als die zu klärende Flüssigkeit haben, sind derartige Kläreinrichtungen nicht geeignet.

Ausgehend vom Stand der Technik liegt der Erfindung die Aufgabe zugrunde, unter Vemeidung der Nachteile der reinen Sedimentation von Feststoffen aus dem Abwasser innerhalb der biologischen Reinigung, insbesondere auf Schiffen eine Vorrichtung zum Abscheiden von Schmutzwasser zu schaffen, die es ermöglicht, die anorganischen und nicht löslichen organischen Feststoffe aus dem Abwasser abzuspalten und gleichzeitig die verflüssigbaren organischen Stoffe wirksam von den nicht verflüssigbaren Feststoffen trennt und dabei verhindert, daß derartige Feststoffe in die Sedimentation der biologischen Abwasserreinigung gelangen und Verstopfungen sowie dadurch bedingte Betriebsstörungen verursachen.

Erfindungsgemäß wird die Aufgabe dadurch gelöst, daß die Abscheideeinrichtung eine Hohlwelle aufweist, die zum oberen Sammelraum hin stirnseitig verschlossen und zum unteren Sammelraum hin stirnseitig offen ist, und in die ein Rohrkörper einmündet, der sich im Bereich des unteren Sammelraums befindet und an dem ein Zulauf für die Einleitung des Abwassers in die Hohlwelle vorgesehen ist und daß mindestens im Bereich des als Feinsiebzylinder ausgebildeten Filterzylinders umfangsseitig Bürsten an der Hohlwelle vorgesehen sind, die mit dem Feinsiebzylinder in Wirkverbindung stehen und schraubenförmig so angeordnet sind, daß die vom Feinsiebzylinder abgestreiften Feststoffe in Richtung des unteren Sammelraums abgeleitet werden, und daß die Hohlwelle unterhalb der Bürsten mit einer Förderschnecke versehen ist, deren Förderrichtung zum unteren Sammelraum hin verläuft, und die Förderschnecke über die Schneckenflügel in einem Stützlager der Zwischenwand geführt ist und die Hohlwelle mitsamt der Bürsten von dem Feinsiebzylinder umschlossen ist, wobei entweder die Hohlwelle mit den Bürsten und der Förderschnecke drehbar und der Feinsiebzylinder mit Stützlager fest angeordnet sind und umgekehrt, und der untere Sammelraum über Öffnungen der Hohlwelle mit dem oberen Sammelraum verbunden ist.

In Weiterbildung der Erfindung ist vorgesehen, daß der Feinsiebzylinder konzentrisch in einem mit dem Behälter verbundenen Zylinderteil angeordnet und befestigt ist, wobei das Zylinderteil mit großen Löchern für den Durchfluß des Schmutzwassers ausgestattet ist.

Vorteilhafte Weiterbildungen der Erfindung sind in den Patentansprüchen 3 bis 16 angegeben.
Während die im eingeleiteten Abwasser enthaltenen groben Feststoffe infolge ihrer Schwerkraft sich im Bodenbereich des unteren Sammelbehälters absetzen, bewirkt die allseitig von Flüssigkeit umspülte Abscheideeinrichtung eine intensive Verwirbelung. Dadurch werden die noch mitgeführten Fest- und Schwimmstoffe ausgewaschen und im Zusammenwirken der Bürsten mit der Wandung des Feinsiebzylinders nach unten gedrängt und über die Förderschnecke in den unteren Sammelraum zurückgeführt, wo sie sich als Bodenschlamm absetzen.Die Rillen im Stützlager der Förderschnecke unterstützen die Förderwirkung. Die rundstabförmigen Abstreifer sorgen dafür, daß die Bürsten ständig von mitgeführten Feststoffrückständen befreit werden, was durch die Schräglage noch begünstigt wird. Mit dem tangentialen Einleiten des Abwassers wird an der Wandung des Rohrkörpers eine starke Verwirbelung des Abwassers erreicht, und dadurch bereits ein Auswascheffekt erzielt. Als Alternative dazu wird bei mittiger Anordnung des Einfüllstutzens und Ausbildung als Einlaufrechen, der sich bogenförmig in den Rohrkörper erstreckt, der Wirbeleffekt noch erhöht und dabei die Feststoffe noch wirksamer nach unten gedrängt, so daß die Flüssigkeit mit hoher Geschwindigkeit nach oben strömt und die Auswaschung der festen Bestandteile weiter begünstigt. Das aus dem Abwasser gewonnene Schmutzwasser wird über den oberen Sammelraum abgeleitet und so verhindert, daß die Feststoffe in die nachfolgende biologische Abwasserreinigung gelangen und Verstopfungen und Betriebsstörungen verursachen.

Die erfindungsgemäße Vorrichtung ist grundsätzlich sowohl auf Schiffen als auch auf dem Land einsetzbar.

Die Erfindung soll nachstehend an einem Ausführungsbeispiel näher beschrieben werden. In der zugehörigen Zeichnung zeigen:

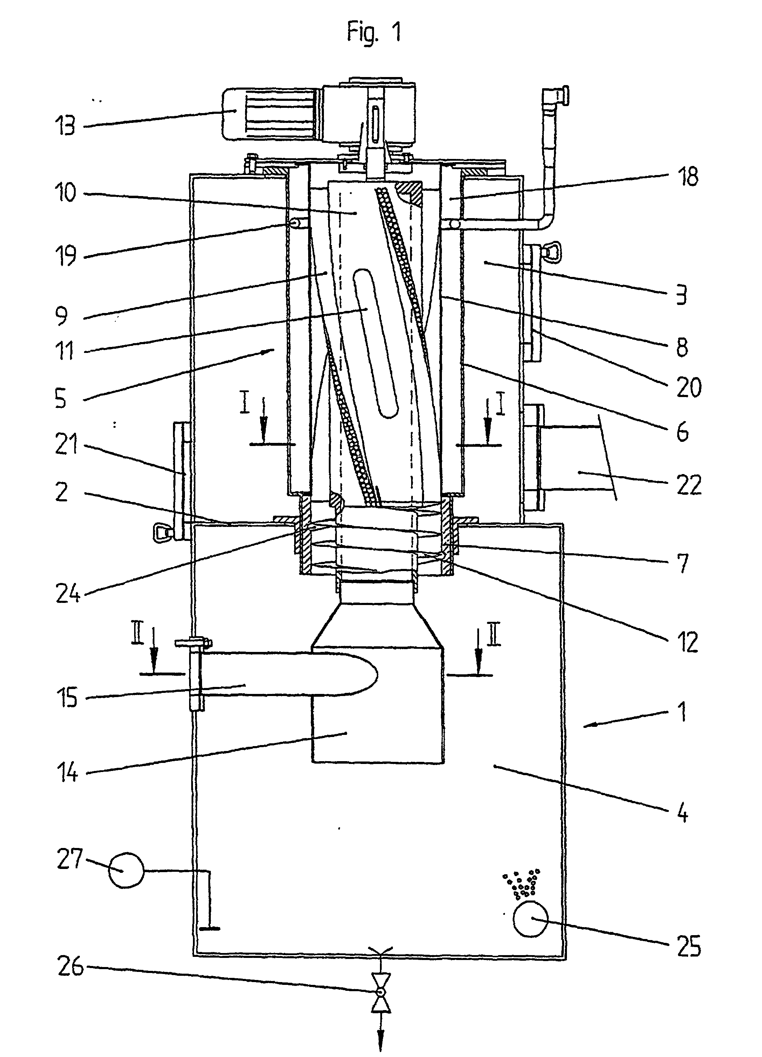

- Fig. 1:: eine Seitenansicht einer erfindungsgemäßen Vorrichtung zum Abscheiden von Schmutzwasser in Schnittdarstellung

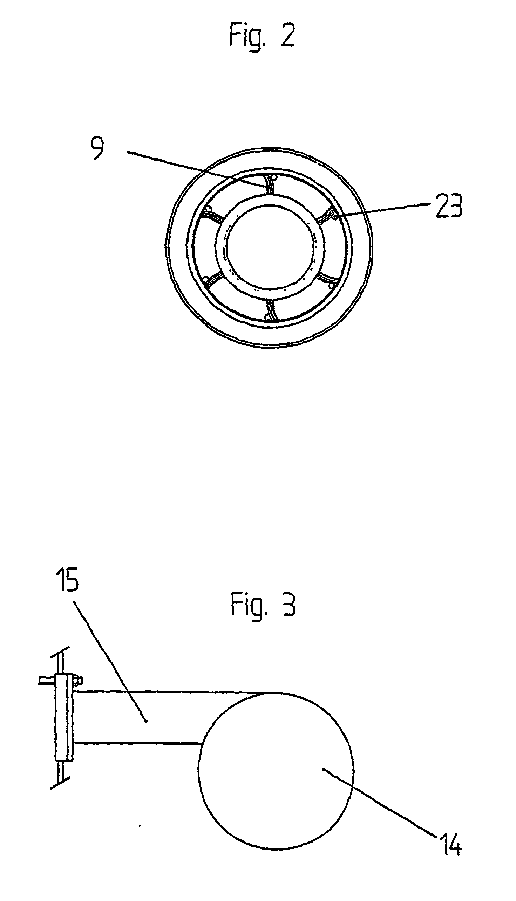

- Fig. 2:: einen Schnitt gemäß Linie I - I nach Fig. 1
- Fig. 3:: einen Schnitt gemäß Linie II-II nach Fig. 1

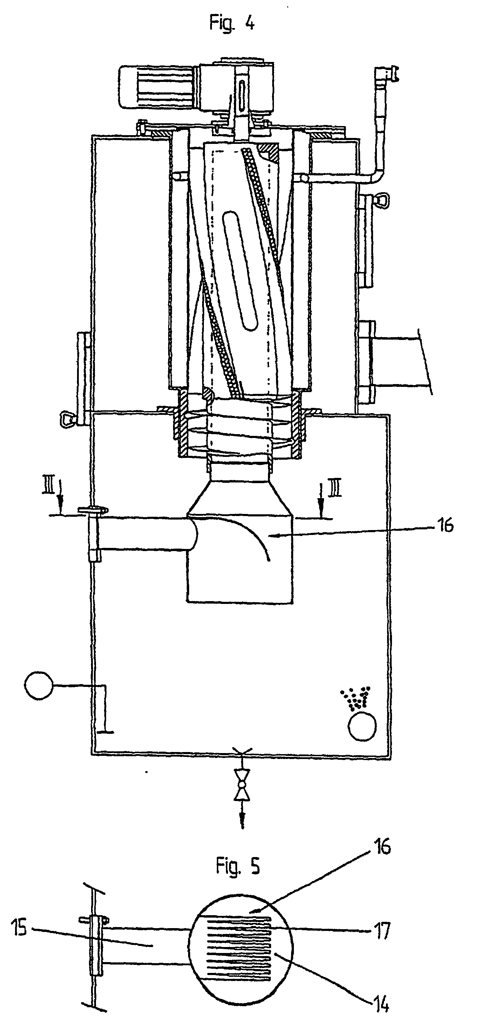

- Fig. 4:: die erfindungsgemäße Vorrichtung gemäß Fig. 1 mit bogenförmigem Einlaufrechen
- Fig. 5:: einen Schnitt gemäß der Linie III - III nach Fig. 4

Ein Behälter 1 ist durch eine Zwischenwand 2 in einen oberen Sammelraum 3 und einen unteren Sammelraum 4 unterteilt. Der obere Sammelraum 3 ist mit dem unteren Sammelraum 4 über eine senkrecht angeordnete Abscheideeinrichtung 5 verbunden. Die Abscheideeinrichtung 5 weist ein Zylinderteil 6 als Gehäuseteil auf, das einerseits am Behälter 1 befestigt ist und andererseits in der Zwischenwand 2 geführt ist und ein Stützlager 7 aufweist. Das Zylinderteil 6 ist am Umfang mit großen Löchern für den Durchfluß des Schmutzwassers versehen. Innerhalb des Zylinderteils 6 ist ein feststehender Feinsiebzylinder 8 mit einer Lochnung von 0,5 mm und größer konzentrisch angeordnet, der eine mit Bürsten 9 bestückte drehbare Hohlwelle 10 umschließt. Die Bürsten 9 sind streifenartig ausgeführt und auf der Hohlwelle 10 schraubenförmig aufgebracht. Zwischen den streifenförmigen Bürsten 9 weist die Hohlwelle 10 Öffnungen 11 auf, die entsprechend den Bürstenverlauf schlitzförmig ausgebildet sind. Unterhalb der Bürsten 9 ist die Hohlwelle 10 mit einer Förderschnecke 12 versehen, über deren Schneckenflügel die Hohlwelle 10 im Stützlager 7 geführt ist. Antriebsseitig ist die Hohlwelle 10 mit einem Getriebemotor 13 verbunden, der am Behälter 1 angeflanscht ist. Behälterseitig mündet die Hohlwelle 10 in einen Rohrkörper 14 im unteren Sammelraum 4, der über einen Einfüllstutzen 15 am Behälter 1 befestigt ist. Über den Einfüllstutzens 15 ist der Rohrkörper 14 konisch ausgebildet, um einen Rückstau des Abwasserstromes und damit das Absinken der Feststoffe zu begünstigen. Der Einfüllstutzen 15 für das zufließende Abwasser kann sowohl tangential als auch mittig zum Rohrkörper 14 angeordnet sein. Bei mittiger Anordnung ist der Einfüllstützen 15 mit einem Einlaufrechen 16 versehen, der etwa zu 2/3 in den Rohrkörper 14 einmündet und bogenförmig nach unten gerichtet ist. Die Gabelzinken 17 sind in Strömungsrichtung des zugeführten Abwassersstromes verjüngt ausgebildet. Damit werden die groben Feststoffe durch die Strömungsenergie in Bodenrichtung nach unten abgeleitet, während die Flüssigkeit durch die Gabelschlitze nach oben strömt. In einem zwischen Feinsiebzylinder 8 und Zylinderteil 6 gebildeten Hohlraum 18 ist eine ringförmige Sprüheinrichtung 19 angebracht, um anhaftende Schlammreste aufzuwirbeln, die über den Feinsiebzylinder 8 der Abscheideeinrichtung 5 in den unteren Sammelraum 4 abgeführt werden. Am Behältersammeiraum 3 sind Sichtfenster 20 ; 21 angebracht. Unterhalb des Sichtfensters 20 befindet sich ein Ablaufstutzen 22 zur Ableitung des Schmutzwassers. An der Innenseite des Feinsiebzylinders 8 sind längsseitig Rundstäbe 23 in entgegengesetzter Richtung zum schraubenförmigen Verlauf der Bürsten 9 angeordnet.

Das Stützlager 7 ist mit einer Rille 24 versehen, deren Steigung der Steigung der Förderschnecke 12 entgegengerichtet verläuft.

Das eingespeiste Abwasser gelangt über den Einfüllstutzen 15 in den Rohrkörper 14. Beim den Aufprall auf die Rohrwand entsteht ein Verwirblungseffekt, wobei die im Abwasser mitgeführten groberen Bestandteile nach unten gedrängt werden. Gleichzeitig füllt sich der unterere Sammelraum 4 mit Feststoff-Flüssigkeitsgemisch auf. Sobald das Abwasser die Zwischenwand 2 erreicht hat, dringt es in die Hohlwelle 10 ein und und strömt über die schlitzförmigen Öffnungen 11 in den Bereich des Feinsiebzylinders 8 ein. Dabei werden mitgerissene Feststoffe, soweit sie den Feinsiebzylinder 8 nicht passieren können von den rotierenden Bürsten 10 und der Förderschnecke 12 in den unteren Sammelraum 4 zurückgeführt, wo sie sich als Schlamm mit den übrigen Feststoffen ablagern. Mit den Bürsten 9 wird außerdem eine ständige Säuberung der Innenfläche und Lochungen des Feinsiebzylinder 8 gewährleistet. Über im Bodenbereich vorgesehene Düsen 25 wird in Abständen Druckluft eingeblasen, um die Auflösung bzw. Auswaschung der den Schwimmstoffen im unteren Sammelbehälter 4 noch anhaftenden organischen Bestandteile zu erreichen. An der Unterseite des Behälters 1 befindet sich ein Ablaßventil 26 über welches der abgesetzte Bodenschlamm bei Bedarf abgezogen wird. Eine Drucksonde 27 signalisiert die Entleerung des Behälters. In der Regel ist der Behälter 1 jedoch so ausgelegt, daß die Entleerung des Sammelraums 4 jeweils beim Anlegen der Schiffe im Hafen erfolgen kann. Das von den Feststoffen weitgehendst befreite Schmutzwasser wird im Sammelraum 3 über den Ablaufstutzen 22 abgeleitet und in - der Zeichnung nicht dargestellte - hintereinander angeordnete Behälter, die durch Überlaufrohre miteinander verbunden sind, zur weiteren biologischen Reinigung eingeleitet.

Die Vorteile der erfindungsgemäßen Vorrichtung bestehen vor allem darin, daß die im Abwaser mitgeführten anorganischen und organischen Feststoffe als Grobstoffe, wie Papier und Zellulosbestandteile, nicht mehr in den biologischen Reinigungsprozeß gelangen können und gleichzeitig einen intensiven Auswaschprozeß unterzogen werden, so daß die Betriebssicherheit derartiger Anlagen erhöht wird und eine Stillegung der nachgeordneten sanitären Einrichtungen vermieden bleibt. Die Anlagen können kleiner gehalten werden und sind platzsparender, was insbesondere auf Schiffen von Bedeutung ist.

Es ist auch möglich und in der Zeichnung nicht dargestellt, den Feinsiebzylinder 8 drehbar mit dem Getriebemotor 13 zu verbinden und die mit Bürsten 9 bestückte Hohlwelle 10 feststehend anzuordnen.

## Patentansprüche

1. Vorrichtung zum Abscheiden von Schmutzwasser aus mit Feststoffen beladenen Abwässern, insbesondere auf Schiffen, bestehend aus einem Behälter (1) der durch eine Zwischenwand (2) in einen unteren Sammelraum (4) zur Einleitung des Abwassers und Ablagerung der Feststoffe und in einen oberen Sammelraum (3) zum Ableiten des Schmutzwassers aufgeteilt ist, wobei der obere Sammelraum (3) mit den unteren Sammelraum (4) über eine vertikal angeordnete Abscheideeinrichtung (5) verbunden ist, einen Filterzylinder zur Abtrennung der Feststoffe aufweist, der von rotierenden, spiralförmig auf dem Umfang eines Bürstenkörpers angeordneten Bürsten abgereinigt wird, und einer am unteren Ende des Filterzylinders befindliche Förderschnecke, **dadurch gekennzeichnet daß** die Abscheideeinrichtung (5) eine Hohlwelle (10) aufweist, die zum oberen Sammelraum (3) hin stirnseitig verschlossen und zum unteren Sammelraum (4) hin stirnseitig offen ist, und in die ein Rohrkörper (14) einmündet, der sich im Bereich des unteren Sammelraums (4) befindet und an dem ein Zulauf für die Einleitung des Abwassers in die Hohlwelle (10) vorgesehen ist und daß mindestens im Bereich des als Feinsiebzylinder (8) ausgebildeten Filterzylinders umfangsseitig Bürsten (9) an der Hohlwelle (10) vorgesehen sind, die mit dem Feinsiebzylinder (8) in Wirkverbindung stehen und schraubenformig so angeordnet sind, daß die vom Feinsiebzylinder (8) abgestreiften Feststoffe in Richtung des unteren Sammelraums (4) abgeleitet werden, und daß die Hohlwelle (10) unterhalb der Bürsten (9) mit einer Förderschnecke (12) versehen ist, deren Förderrichtung zum unteren Sammelraum (4) hin verläuft, und die Förderschnecke (12) über die Schneckenflügel in einem Stützlager (7) der Zwischenwand (2) geführt ist und die Hohlwelle (10) mitsamt der Bürsten (9) von dem Feinsiebzylinder (8) umschlossen ist, wobei entweder die Hohlwelle (10) mit den Bürsten (9) und der Förderschnecke (12) drehbar und der Feinsiebzylinder (8) mit Stützlager (7) fest angeordnet sind und umgekehrt und der untere Sammelraum (4) über Öffnungen (11) der Hohlwelle (10) mit dem oberen Sammelraum (3) verbunden ist.

2. Vorrichtung nach Anspruch 1, **dadurch gekennzeichnet, daß** der Feinsiebzylinder (8) konzentrisch in einem mit dem Behälter (1) verbundenen Zylinderteil (6) angeordnet und befestigt ist, und das Zylinderteil (6) mit großen Löchern für den Durchfluß des Schmutzwassers ausgestattet ist

3. Vorrichtung nach Anspruch 1 **dadurch gekennzeichnet, daß** der Einfüllstutzen (15) am Rohrkörper (14) tangential angeordnet ist.

4. Vorrichtung nach Anspruch 1, **dadurch gekennzeichnet, daß** der Einfüllstutzen (15) am Rohrkörper (14) mittig angeordnet ist und als gabelförmig ausgebildeter Einlaufrechen (16) teilweise in den Rohrkörper (14) hineinragt.

5. Vorrichtung nach Anspruch 4, **dadurch gekennzeichnet, daß** der gabelförmige Einlaufrechen (16) bogenförmig nach unten gerichtet ist und etwa zu 2/3 in den Rohrkörper (14) einmündet

6. Vorrichtung nach Anspruch 4 oder 5, **dadurch gekennzeichnet daß** die Gabelzinken (17) des Einlaufrechens (16) in Strömungsrichtung verjüngt verlaufend ausgebildet sind.

7. Vorrichtung nach Anspruch einem der vorhergehenden Ansprüche, **dadurch gekennzeichnet, daß** der Rohrkörper (14) oberhalb des einmündenden Einfüllstutzens (15) konisch ausgebildet ist, wobei die Verjüngung in Richtung der aufwärts strömenden Abwassers verläuft.

8. Vorrichtung nach Anspruch 1 **dadurch gekennzeichnet, daß** die Bürsten (10) auf der Hohlwelle (10) sich gegenüberliegend angeordnet sind.

9. Vorrichtung nach Anspruch 1 oder 9, **dadurch gekennzeichnet, daß** die Bürsten streifenförmig ausgebildet sind.

10. Vorrichtung nach einem der vorhergehenden Ansprüche, **dadurch gekennzeichnet, daß** an der Innenseite des Feinsiebzylinders (8) längsseitig mehrere Abstreifer (23) sich gegenüberliegend angeordnet sind.

11. Vorrichtung nach Anspruch 10, **dadurch gekennzeichnet, daß** die Abstreifer (23) als Rundstäbe ausgebildet sind und in entgegengesetzter Richtung zur Steigung der Bürsten (9) angeordnet sind.

12. Vorrichtung nach einem der vorhergehenden Ansprüche **dadurch gekennzeichnet, daß** das die Förderschnecke (12) umschließende Stützlager (7) mit Rillen (24) versehen ist.

13. Vorrichtung nach Anspruch 1, **dadurch gekennzeichnet daß** die Öffnungen (11) der Hohlwelle (10) schlitzförmig, entsprechend der schraubenförmig verlaufenden Bürsten (9) angeordnet sind.

14. Vorrichtung nach Anspruch 1, **dadurch gekennzeichnet, daß** in einem zwischen dem Zylinderteil (6) und dem Feinsiebzylinder (8) gebildeten Hohlraum (18) eine ringförmige Sprüheinrichtung (19) angebracht ist.

15. Vorrichtung nach einem der vorhergehenden Ansprüche, **dadurch gekennzeichnet, daß** im Sammelraum (4) eine Drucksonde (27) vorgesehen ist.

16. Vorrichtung nach Anspruch 1, **dadurch gekennzeichnet, daß** der Sammelraum (3) mit Sichtfenstern (20; 21) versehen ist.

## Claims

1. Apparatus for separating dirty water from effluents loaded with solids, in particular on board ships, comprising a container (1) which is subdivided by an intermediate wall (2) into a lower collecting chamber (4) for introducing the effluent and precipitating the solids and into an upper collecting chamber (3) for discharging the dirty water, the upper collecting chamber (3) being connected to the lower collecting chamber (4) via a separation device (5) which is arranged vertically, has a filter cylinder for separating the solids, which is cleaned off by rotating brushes arranged spirally on the circumference of a brush element, and a screw conveyor located at the lower end of the filter cylinder, **characterized in that** the separation device (5) has a hollow shaft (10) which is closed at the end towards the upper collecting chamber (3) and open at the end towards the lower collecting chamber (4) and into which a tubular element (14) opens which is located in the area of the lower collecting chamber (4) and on which a feed for the introduction of the effluent into the hollow shaft (10) is provided, and **in that**, at least in the area of the filter cylinder, designed as a fine mesh cylinder (8) brushes (9) are provided circumferentially on the hollow shaft (10), have an operative connection with the fine mesh cylinder (8) and are arranged helically in such a way that the solids stripped off the fine mesh cylinder (8) are discharged in the direction of the lower collecting chamber (4), and **in that** the hollow shaft (10) below the brushes (9) is provided with a screw conveyor (12) whose conveying direction runs towards the lower collecting chamber (4), and the screw conveyor (12) is guided via the turns of the screw in a supporting bearing (7) belonging to the intermediate wall (2), and the hollow shaft (10) together with the brushes (9) are enclosed by the fine mesh cylinder (8), either the hollow shaft (10) having the brushes (9) and the screw conveyor (12) being rotatable and the fine mesh cylinder (8) with supporting bearing (7) being arranged to be fixed and vice versa, and the lower collecting chamber (4) being connected to the upper collecting chamber (3) via openings (11) in the hollow shaft (10).

2. Apparatus according to Claim 1, **characterized in that** the fine mesh cylinder (8) is arranged and fixed concentrically in a cylindrical part (6) connected to the container (1), and the cylindrical part (6) is equipped with large holes for the dirty water to pass through.

3. Apparatus according to Claim 1, **characterized in that** the filling connecting piece (15) is arranged tangentially on the tubular element (14).

4. Apparatus according to Claim 1, **characterized in that** the filling connecting piece (15) is arranged centrally on the tubular element (14) and, as an inlet rake (16) of fork-like design, projects to some extent into the tubular element (14).

5. Apparatus according to Claim 4, **characterized in that** the fork-like inlet rake (16) is oriented downwards in a curve and opens about 2/3 of the way into the tubular element (14).

6. Apparatus according to Claim 4 or 5, **characterized in that** the tines (17) of the fork of the inlet rake (16) are designed to taper as they extend in the flow direction.

7. Apparatus according to one of the preceding claims, **characterized in that** the tubular element (14) is of conical design above the opening filling connecting piece (15), the taper extending in the direction of the effluent flowing upwards.

8. Apparatus according to Claim 1, **characterized in that** the brushes (9) are arranged opposite one another on the hollow shaft (10).

9. Apparatus according to Claim 1 or 8, **characterized in that** the brushes are of strip-like design.

10. Apparatus according to one of the preceding claims, **characterized in that** a plurality of wipers (23) are arranged opposite one another on the longitudinal side on the inside of the fine mesh cylinder (8).

11. Apparatus according to Claim 10, **characterized in that** the wipers (23) are designed as round rods and are arranged in the opposite direction to the pitch of the brushes (9).

12. Apparatus according to one of the preceding claims, **characterized in that** the supporting bearing (7) enclosing the screw conveyor (12) is provided with grooves (24).

13. Apparatus according to Claim 1, **characterized in that** the openings (11) in the hollow shaft (10) are arranged in the form of slots corresponding to the brushes (9) extending helically.

14. Apparatus according to Claim 1, **characterized in that** an annular spray device (19) is fitted in a hollow space (18) formed between the cylindrical part (6) and the fine mesh cylinder (8).

15. Apparatus according to one of the preceding claims, **characterized in that** a pressure probe (27) is provided in the collecting chamber (4).

16. Apparatus according to Claim 1, **characterized in that** the collecting chamber (3) is provided with viewing windows (20; 21).

## Revendications

1. Dispositif de séparation d'eau sale d'eaux usées chargées de matières solides, en particulier sur des navires, se composant d'un récipient (1) qui est divisé par une paroi intermédiaire (2) en une chambre collectrice inférieure (4) pour diriger l'eau usée et déposer les matières solides et en une chambre collectrice supérieure (3) pour dériver l'eau sale, la chambre collectrice supérieure (3) étant connectée à la chambre collectrice inférieure (4) par le biais d'un dispositif de séparation (5) agencé verticalement, présentant un cylindre filtrant pour la séparation des matières solides, qui est nettoyé par des brosses rotatives, disposées en forme de spirale sur la périphérie d'un corps de brosse, et d'une vis sans fin d'amenée se trouvant à l'extrémité inférieure du cylindre filtrant, **caractérisé en ce que** le dispositif de séparation (5) présente un arbre creux (10) qui est fermé du côté frontal vers la chambre collectrice supérieure (3) et qui est ouvert du côté frontal vers la chambre collectrice inférieure (4), et dans lequel débouche un corps tubulaire (14) qui se trouve dans la région de la chambre collectrice inférieure (4) et au niveau duquel est prévu une entrée pour l'introduction de l'eau usée dans l'arbre creux (10), et **en ce qu'**au moins dans la région du cyclindre filtrant réalisé en tant que cylindre à tamis fin (8), des brosses (9) sont disposées du côté de la périphérie sur l'arbre creux (10), lesquelles sont en liaison coopérante avec le cylindre à tamis fin (8) et sont disposées en forme hélicoïdale de telle sorte que les matières solides raclées par le cylindre à tamis fin (8) soient déviées dans la direction de la chambre collectrice inférieure (4) et **en ce que** l'arbre creux (10) est pourvu en dessous des brosses (9) d'une vis sans fin d'amenée (12) dont la direction d'amenée s'étend vers la chambre collectrice inférieure (4), et la vis sans fin d'amenée (12) est guidée par le biais des ailettes de la vis sans fin dans un palier de support (7) de la paroi intermédiaire (2) et l'arbre creux (10) est entouré avec les brosses (9) par le cylindre à tamis fin (8), l'arbre creux (10) avec les brosses (9) et la vis sans fin d'amenée (12) étant disposés rotatifs et le cylindre à tamis fin (8) avec le palier de support (7) étant fixes, et inversement, et la chambre collectrice inférieure (4) étant connectée, par le biais d'ouvertures (11) de l'arbre creux (10) à la chambre collectrice supérieure (3).

2. Dispositif selon la revendication 1, **caractérisé en ce que** le cylindre à tamis fin (8) est disposé et fixé concentriquement dans une partie cylindrique (6) connectée au récipient (1), et la partie cylindrique (6) est équipée de gros trous pour le passage de l'eau sale.

3. Dispositif selon la revendication 1, **caractérisé en ce que** la tubulure de remplissage (15) est disposée tangentiellement sur le corps tubulaire (14).

4. Dispositif selon la revendication 1, **caractérisé en ce que** la tubulure de remplissage (15) est disposée au centre sur le corps tubulaire (14) et pénètre en tant que grille de retenue d'entrée (16) en forme de fourche partiellement dans le corps tubulaire (14).

5. Dispositif selon la revendication 4, **caractérisé en ce que** la grille de retenue d'entrée (16) est orientée avec une forme cintrée vers le bas et débouche approximativement aux 2/3 dans le corps tubulaire (14).

6. Dispositif selon la revendication 4 ou 5, **caractérisé en ce que** les doigts de la fourche (17) de la grille de retenue d'entrée (16) sont réalisés de manière à s'étendre en rétrécissant dans le sens de l'écoulement.

7. Dispositif selon l'une quelconque des revendications précédentes, **caractérisé en ce que** le corps tubulaire (14) est réalisé avec une forme conique au-dessus de la tubulure de remplissage (15) débouchante, le rétrécissement s'effectuant dans le sens de l'eau usée s'écoulant vers le haut.

8. Dispositif selon la revendication 1, **caractérisé en ce que** les brosses (9) sont disposées en regard sur l'arbre creux (10).

9. Dispositif selon la revendication 1 ou 8, **caractérisé en ce que** les brosses sont réalisées en forme de bandes.

10. Dispositif selon l'une quelconque des revendications précédentes, **caractérisé en ce que** plusieurs racleurs (23) sont disposés en regard sur le côté interne du cylindre à tamis fin (8) du côté longitudinal.

11. Dispositif selon la revendication 10, **caractérisé en ce que** les racleurs (23) sont réalisés en tant que barres rondes et sont disposés dans le sens opposé à l'inclinaison ascendante des brosses (9).

12. Dispositif selon l'une quelconque des revendications précédentes, **caractérisé en ce que** le palier de support (7) entourant la vis sans fin d'amenée (12) est pourvu de cannelures (24).

13. Dispositif selon la revendication 1, **caractérisé en ce que** les ouvertures (11) de l'arbre creux (10) sont disposées en forme de fentes, de manière correspondant aux brosses (9) s'étendant en forme hélicoïdale.

14. Dispositif selon la revendication 1, **caractérisé en ce qu'**un dispositif de pulvérisation annulaire (19) est disposé dans un espace creux (18) formé entre la partie cylindrique (6) et le cylindre à tamis fin (8).

15. Dispositif selon l'une quelconque des revendications précédentes, **caractérisé en ce qu'**une sonde de pression (27) est prévue dans la chambre collectrice (4).

16. Dispositif selon la revendication 1, **caractérisé en ce que** la chambre collectrice (3) est pourvue de fenêtres de regard (20; 21).
